# EUROPEAN PATENT SPECIFICATION

(11) **EP 4 441 416 B1**
(45) Date of publication and mention of the grant of the patent: **19.11.2025**
(21) Application number: 22829746.1
(22) Date of filing: 01.12.2022
(51) Int. Cl.: F17C 1/00, F17C 13/08

(54) **SUBSEA HYDROGEN STORAGE SYSTEM**
UNTERWASSER-WASSERSTOFFSPEICHERSYSTEM
SYSTÈME DE STOCKAGE D'HYDROGÈNE SOUS-MARIN

(30) Priority: 01.12.2021 GB 202117371
(43) Date of publication of application: 09.10.2024
(73) Proprietor: Subsea 7 Norway AS, 4033 Stavanger (NO)
(72) Inventor: DAASVATN, Sigbjørn, 4737 Hornnes (NO); MELING, Torstein, 4056 Tananger (NO)
(74) Representative: Keltie LLP
(86) International application number: PCT/EP2022/084143
(87) International publication number: WO 2023/099703

(56) References cited:
- WO-A1-2022/194989
- DE-A1- 3 506 123
- GB-A- 2 581 178
- US-A- 4 190 072

## Description

This invention relates to the storage of hydrogen underwater, proposing a novel, safe, and scalable way of storing hydrogen gas at the seabed.

As generation of electricity from renewable sources is variable or intermittent, for example when wind speeds are low, additional energy storage is required to ensure a continuous supply of green electrical power. In this respect, excess power generated from renewable sources can be used to produce hydrogen, known in that context as 'green hydrogen', when the supply of electricity exceeds other demands.

The principle of converting surplus electrical energy into hydrogen or other gas fuel is known as power-to-gas or P2G. Once electrical energy is converted into gas, it can be used for various purposes. For example, hydrogen produced from renewable energy can be used for other power generation purposes, including powering a hydrogen fuel cell to generate electricity when demand for electricity would otherwise exceed supply from other green sources.

Hydrogen can be produced by a carbon-free electrolysis process in an electrolyser, in which electric current splits water into hydrogen and oxygen. In principle, seawater can be used in electrolysis if an anode is adapted to counteract the formation of chlorine gas from dissolved salt. Electrolysers range in size from small units that are suitable for small-scale distributed hydrogen production to large-scale, central production facilities that could be tied directly to renewable energy producers.

Marine renewable power installations, such as wind turbines floating offshore, represent a substantial opportunity to use wind and wave resources for the generation of green hydrogen at scale. For this purpose, large-scale electrolysers may be housed on standalone platforms or aboard surface vessels such as converted bulk carriers. Smaller electrolysers could even be housed on individual wind turbine structures.

A wind power provider may call on stored hydrogen to support the grid if wind power is falling out of production, much like a pumped storage solution used in the hydropower field. In that case, a storage system is ancillary to a wind power plant to maintain power production when available wind power reduces below a certain level, or if the market requires reserve power capacity to be engaged to balance demand. Stored energy is then used for power generation in accordance with demand.

Hydrogen produced in this way can also be delivered in bulk to maritime consumers or to consumers onshore, whether industrial or domestic. For example, hydrogen-powered fuel cells may be used for zero-emission propulsion of ships or land vehicles, or hydrogen can be used in the production of ammonia.

To reduce CO₂ emissions from hydrocarbon production, offshore wind energy can also be used to generate electricity for exploiting subsea hydrocarbon fields. In those circumstances, smaller reservoirs could be exploited with the aid of fuel cells as an alternative to a traditional umbilical that supplies electricity from a host. In that case, the principle is that offshore oil production can be maintained by wind power, and if the wind dies down, the stored power can maintain a certain minimum level of production. For this purpose, electrical power generated in a fuel cell can drive processes on a surface installation and any surplus power can be transformed to AC connected to another consumer such as via a grid.

It is advantageous to store pressurised hydrogen underwater for ongoing bulk supply to a consumer or to fuel electricity generation during periods of high demand or low supply. Thus, the focus of the invention is storage of hydrogen in subsea tanks. For this purpose, the invention employs advanced materials technology and field-proven engineering principles derived from the subsea oil and gas industry to enable hydrogen to be stored safely in tanks on the seabed. The invention finds most benefit where the stored hydrogen is produced by electrolysis of water using electricity generated from nearby renewable sources, and where the stored hydrogen is later used in a fuel cell to generate electricity again.

Fixed foundations are preferred for wind turbines located in water depths of less than 30m to 50m but floating turbines may be required in waters deeper then 50m. There are numerous high-energy wind sites far offshore, but they lie in water beyond the depth at which existing foundation technologies are commercially viable. However, cost-competitive foundation technologies suitable for water depths up to 400m are under development and so would enable exploitation of most of the favourable wind energy resources around the coastlines of the world. Beneficially, the hydrogen storage solution of the invention is useful for both shallow and deep locations: the expected depth range for the storage solution is around 20m to 400m, although deeper locations could be accommodated in principle.

The conventional method for transporting and storing hydrogen under pressure is very common: it involves the use of a pressure vessel or tank such as a cylinder or a rack of such tanks, fluidly connected together by tubing. A structure supports the or each tank. Examples of such arrangements are used for transportation by truck, as disclosed in CN 112539344, or by ship as disclosed in EP 2829467. Additionally, to manage leaks, US 7784485 proposes that hydrogen storage tanks are installed in a liquid-filled basin defined by a supporting structure anchored to soil. All of these solutions are designed for use on land or, in marine applications, above the surface.

Underwater storage of gas presents additional challenges, such as external hydrostatic pressure at depth that could crush a tank when it is empty. Another challenge is how to handle upthrust forces due to positive buoyancy of the tanks even when they are full, especially in view of the low density of hydrogen and the light weight of composite tanks that may be favoured for hydrogen storage. It is also challenging to construct a large subsea gas storage facility and all the more challenging with increasing depth.

WO 2020/161211 discloses a subsea gas storage system that comprises a set of steel pipes connected together to define a gas storage volume. The pipes are assembled on a floating structure with a hull and ballast system. Whilst the weight of the steel pipes is helpful for ballasting, fabricating a steel structure capable of sustaining high internal pressure is challenging. Moreover, steel is vulnerable to hydrogen embrittlement. WO 2020/161211 suggests the use of internal composite storage cylinders within the steel pipes to protect the surrounding steel from embrittlement when storing hydrogen, but this would add a great deal of complication and cost.

JP H09317622 discloses an underwater pumped storage system in which a large tank is mounted on a concrete pedestal. The tank contains seawater. The seabed is levelled, a metal mould is lowered to the seabed and concrete is injected into the mould to form the pedestal before the tank is lowered onto the pedestal. This is a complex operation and may be impractical in deeper water.

WO 2022/194989 discloses a submersible storage system having a negatively buoyant first frame structure and a second frame structure arranged on top of the first frame structure. Each frame structure comprises cradles for storage tanks that have a positive buoyancy in water, whether filled with gas or not. Fastening devices in the form of bands or straps prevent the tanks from floating upwards when the system is submerged in water. A cover is arranged on top of the second frame structure to protect the system from falling objects or fishing trawls.

Against this background, the invention resides, in one sense, in a method of providing a subsea gas storage unit. The method comprises: manufacturing a weighting base; assembling on the base an array of interconnecting storage tanks and a restraint system that secures the tanks to the base against buoyant upthrust, wherein the restraint system defines load paths from each tank to the base that bypass all other tanks of the array; and fixing a cover structure to the base, the cover structure extending protectively over the array of tanks. The tanks have walls of a fibre reinforced polymer composite. The tanks may be urged toward the base by virtue of tension in the restraint system. The cover structure may be kept separate from or decoupled from the restraint system.

Elegantly, the unit may be built on a deck of a barge. If a submersible barge is used, the barge may then be lowered in water to flood the deck, allowing the unit to be floated from the deck and separated from the barge. A barge may transport the unit to or toward an installation site before launching the unit into the water, for example by lowering the barge or by pulling or pushing the unit overboard. The unit may also be towed at least part of the way to the installation site.

The base may be manufactured by casting it from concrete poured into a mould. Conveniently, the array of tanks can then be assembled on the base wherever the base was cast, for example on a deck of a barge. Anchor fixings of the restraint system may be embedded into the concrete of the base, for example during casting.

Lateral movement of the tanks in directions parallel to a plane of an upper face of the base may be resisted by placing each tank upon at least one support that is contoured to complement an external contour of the tank. The action of the restraint system on the tank can apply compression to the support. At least one of the supports may be sandwiched between tanks of successive layers of the array.

A set of upright members of the restraint system may be placed on the base, those members extending upwardly from the base in locations between and beside the tanks of the array. A series of restraints can then be placed on top of each tank, each restraint being attached to upright members of the set disposed on mutually opposed sides of the underlying tank. Tension in the upright members can then urge the restraints and the tanks toward the base. The restraints themselves can be placed under tension and may, for example, be bent around an upper side of each tank. The restraints may comprise a strap defined by parallel portions of a length of rope.

If the array of tanks comprises a stack of layers, the upright members can extend upwardly beyond a lower layer of the stack to an upper layer of the stack. In that case, each upright member may have at least two restraints attached to it at levels above the base that correspond to those layers.

Once the unit has been built, at least the base and the tanks of the unit may initially be submerged in water. Subsequently, the unit may be towed through water in a surface towing operation or in a mid-water towing operation before the unit is lowered to the seabed. Buoyant upthrust loads acting on the tanks can be fed through the restraint system from each tank to the base on load paths that bypass all of the other tanks of the array. Hydrogen can be pumped into the tanks of the array after the unit has been installed underwater.

Two or more of the units can be coupled together in a modular arrangement, preferably with fluid communication between those units. The connected units may be towed as a series before the series of units is lowered together to the seabed.

Correspondingly, the inventive concept embraces a subsea gas storage unit that comprises: a weighting base such as a cast concrete slab; an array of interconnecting storage tanks positioned on the base; a restraint system that secures the tanks to the base against buoyant upthrust, wherein the restraint system defines load paths from each tank to the base that bypass all other tanks of the array; and a protective cover structure disposed over the array of tanks and fixed to the base.

The tanks have walls of a fibre-reinforced polymer composite and may be lined with at least one internal polymer layer. To the benefit of stability in water, the centre of buoyancy of the unit is disposed a substantial distance above its centre of gravity by virtue of positive buoyancy of the lightweight tanks opposed to negative buoyancy of the heavy base.

The inventive concept extends to an offshore installation capable of generating electrical energy from a renewable source. The installation comprises an electrolyser powered by that electrical energy and at least one unit of the invention, where the tanks of the unit are in fluid communication with the electrolyser. The installation may further comprise a fuel cell in fluid communication with the tanks of the or each unit. Where the installation is a surface installation such as a platform, fluid communication with the tanks may be effected via a riser.

The invention contemplates the use of large-volume tanks that store hydrogen in the gaseous phase compressed to high pressure, typically in the range of 350 to 700 bar. However, the maximum storage pressure could be kept down to the lower end of the typical range, hence around 350 bar, by increasing volume so as not to lose storage capacity. In this respect, it is not critical if compressed gas tanks have a large footprint in fixed installations and particularly in subsea installations.

Decades of effort have been devoted to designing pressurised fluid storage tanks to be as compact and economical as possible. The evolution of such vessels has progressed through distinct stages, namely all-metal tanks (Type I), metal hoop wrapped composite tanks (Type II), metal-lined composite tanks (Type III) and polymer-lined composite tanks (Type IV). Type V represents an all-composite, linerless tank, the first of which has recently been tested and built for a real-world application.

Composite high-pressure vessels have been used extensively for storing compressed natural gas in vehicles. Similar storage concepts are being developed for hydrogen gas storage. In the context of the invention, composites are fibre-reinforced polymer-matrix materials, commonly referred to as fibre-reinforced polymers (FRPs). Carbon fibres are the structural fibre of choice but are expensive for high-volume applications. Consequently, less expensive fibres, such as glass fibres, are often used to reinforce composite pressure vessels.

The small atomic size of hydrogen results in high mobility, presenting challenges when containing hydrogen using structural materials. The main challenges are hydrogen permeation through the structure and hydrogen-induced degradation of its material properties. As an example, embrittlement of steel has already been mentioned in the abovementioned summary of the prior art. Thus, a liner with low hydrogen permeability is commonly used as a permeation barrier to mitigate any damaging effect of hydrogen on the structural composite. The liner material can be either a metal such as aluminium in a Type III tank or a polymer such as high-density polyethylene (HDPE) in a Type IV tank.

Type I and Type II tanks are less favoured for subsea use because exposed metals complicate corrosion protection. Whilst use of a Type III tank would be possible, the invention currently contemplates storing compressed hydrogen in a Type IV tank comprising a polymer liner within a composite structure that handles mechanical forces. For example, the invention can employ a tank with an HDPE liner within a composite shell of an epoxy matrix with a filament-wound carbon fibre reinforcement. This provides an advantageous combination of high strength, light weight, and excellent resistance to fatigue and corrosion.

Large buoyant upthrust forces arising from the specific gravity of composite materials and the displacement of high-volume tanks are an important factor when designing a multi-tank structure and when balancing forces of gravity and buoyancy. The invention exploits the lightness and positive buoyancy of composite tanks as an advantage in combination with the negative buoyancy of a heavy supporting frame or structural foundation. This enables simple balancing of the structure by, for example, adjusting the weight of a slab below the tanks. However, handling the large opposing forces of weight and buoyancy is a challenge within the structure itself.

The aforementioned Type V tanks are an emerging technology and may prove to be suitable for the purposes of the invention in the future, especially if their cost falls significantly. However, if Type V tanks prove to be lighter than Type IV tanks, Type IV tanks may be more cost-effective as they will have less need for concrete or other weighting or ballast to balance the net buoyant upthrust of the tanks when submerged in water.

In principle, subject to the confines of a supporting structure, storage tanks should be made as long and as wide as production techniques will allow. For example, given a design pressure of 350 bar, each lined composite tank may have an inner diameter in the range of 1.25m to 1.5m and an overall length of 15m. With an inner diameter of 1.25m, a tank of that length would have a gas storage volume of about 17.5 m³. At a pressure of 350 bar, the corresponding stored mass of hydrogen in each tank would be around 420 kg assuming a density of around 25 kg/m³ and a temperature of around 5°C.

In view of the optimally elongate shape of a generally cylindrical storage tank, which has a high aspect ratio of length to width, it will generally be space-efficient to bundle or to stack the tanks on parallel axes in a one-dimensional or two-dimensional array. Scaling to match storage requirements is achieved simply by adding or removing storage tanks and/or by changing the dimensions and especially the length of one or more of the tanks.

Embodiments of the invention implement a method to manufacture and install an underwater hydrogen storage system, the method comprising: manufacturing a weighting base structure, for example by casting the base structure by pouring concrete into a mould; assembling storage tanks on the base structure; installing piping between the storage tanks and connector hubs; installing a cover over the storage tanks, for example of glass fibre reinforced polymer composite; and transporting and lowering the storage system under water.

The storage system could be manufactured on a transport vessel, in which case a mould for casting the base structure may be installed on the deck of the transport vessel.

The storage tanks may be made of polymer composite, preferably reinforced with carbon fibre or glass fibre.

The storage tanks may be secured to fasteners on the weighting base structure by tension wires and clamps. For example, the fasteners may comprise vertical tensile wires or rods and the tanks may be held by pliant bands and supports. The bands could, for example, be made of a composite such as a polymer composite or a metal/polymer sandwich. Such bands can define composite clamps that connect to the concrete sub-structure via tension rods to hold the tanks in position and provide stiffness to the system. The clamps transfer holdback forces over a large area.

Connector hubs may be grouped on smaller sides or ends of the weighting base structure. Such connector hubs may comprise at least one inlet on one side or end, and at least one outlet on an opposite side or end.

The weighting base structure may comprise a coupling for mechanically coupling at least two hydrogen storage systems of the invention together.

Some embodiments of the invention are particularly concerned with storage of hydrogen in tanks that are integrated into a towable structure. Specifically, as cost has been a major barrier to the adoption of hydrogen technology, the invention provides a low-cost towable solution for hydrogen storage tanks by adopting some principles from submerged production units (SPUs) known for subsea processing of production fluids in the subsea oil and gas industry. The invention thereby benefits from knowledge of towing, installation, impact loads, overtrawl protection and so on that is already well understood from previous SPU projects. Thus, preferred embodiments of the invention, to be described, focus on storage tank configurations, as part of a towable structure, based on SPU-like principles.

The invention therefore proposes a discrete self-supporting buoyant unit comprising a complete storage system packaged within an integrated protection structure. The invention provides a protective, readily transportable structure on which the elements of a storage system may be assembled and tested onshore, near shore or on a barge before installation. The unit is apt to transport the storage system to a seabed installation site by surface towing or mid-water towing and then protects the system when on the seabed.

The invention benefits from a coordinated fabrication technique in which components are prefabricated before tanks and piping are assembled quickly into a towable structure. The invention particularly proposes assembling individual skids on a tailor-made barge suitable for sinking into the sea or, alternatively, to assemble and then move skids into the sea from a coastal location onshore. These techniques remove a requirement to hire any plant or dry dock facilities for the purpose of fabrication and are apt to be used for assembly of the system in various regions around the world.

The assembly process starts by pre-casting a slab. For this purpose, a re-useable mould is tailored to match or slightly exceed the dimensions of a storage tank assembly defined for a particular storage system. Dimensional variations will typically be in the length of the system but could also be in the width of the system.

Having grouted the concrete slab with its reinforcements and having inserted or embedded connections or anchor points into the slab for a tank restraining system, an array of composite tanks can then be installed onto the slab. The tanks can be connected to the slab by simple, screwed connections tying them to the slab. This arrangement efficiently establishes a balance between the positively buoyant tanks and the negatively buoyant slab to ensure a structure that is stable structurally, hydrostatically and hydrodynamically.

Where an array of tanks comprises two or more rows or layer of tanks in the vertical direction, the tanks are advantageously connected to the slab without any transfer of upthrust loads between the tanks of one row and the tanks of another row. The simple grouted steel connections provide a threaded solution to the wires for the tanks and an associated band that distributes holdback forces over the top of each tank. Tension leg connections control the buoyancy of the tanks effectively, distribute forces evenly over the top surface of each tank and feed those forces into the concrete slab.

Hydrogen gas is distributed and collected via small-diameter piping that leads gas to and from tank components. A tie-in porch may be provided at an end of the slab connecting towards a subsea pipeline or riser that conveys gas to and from the unit, for example from an electrolyser and to a fuel cell on a surface installation. A flexible riser can provide a simple connection for those purposes in shallow water.

Scaling-up capacity can simply involve increasing the number of units used together in a particular installation. For example, if each unit can store 12 to 13 tons of hydrogen, three such units would bring the total capacity of an installation to around 36 to 39 tons. Thus, connection of two or more storage units in series or parallel can build up a larger system to scale the storage capacity as required. Weight may be distributed evenly on each unit and along a towable series of units, enabling longer and more capacious arrangements to be assembled as required. Provision may be made for fluid communication between successive units so that hydrogen can be conveyed across a plurality of units, for example along a series or train of units, to and from a common riser that may be shared between the units.

Towing and installation may employ similar principles to those used for an SPU. The resulting storage unit of the invention is a unique type of a barge as most of its components are submerged, or wet, during a surface towing operation. In particular, piping, valves and hydrogen tanks are submerged when the unit floats at the surface. Only a small part of the top of the unit will remain above the waterline, representing the reserve buoyancy of the structure in a surface mode. The unit may have variable buoyancy or static buoyancy. In a submerged towing configuration, additional weight from tow rigging and clump weights may be added to overcome the reserve buoyancy and to make the structure negatively buoyant.

The hydrogen storage unit of the invention differs from a traditional SPU in the application of buoyancy from the storage tanks. Advantageously, as a result, the centre of buoyancy of the structure is always well above the centre of gravity of the structure, which makes the unit very stable during a towing operation.

The typical mass of each unit of the invention would be in the range of 1100 to 1300 tons, which is comparable to a small SPU containing a production system. Thus, the towing forces during a tow-out operation are not expected to be higher than for a typical SPU. In general, the unit can be lowered directly to the seabed and landed like an SPU system. Thus, installation can commence directly from a tow configuration by lengthening winch wires to lower the unit slowly to the seabed. There will be no more than marginal changes in the buoyancy of the unit during tow-out and installation, other than buoyancy adjustments made deliberately during the process.

Having landed the system in position on the seabed, stability can be assured by flooding buoyancy tanks within the concrete slab or a frame of the unit, by reducing buoyancy of other buoyant elements attached to the unit or by detaching removable buoyancy modules. A riser can then be installed to establish a two-way gas line communicating with a surface installation such as a platform.

Thus, the invention provides a subsea unit suitable for storing hydrogen gas. The unit comprises a weighting base and an array of interconnecting storage tanks on the base. The base may be cast from concrete on a deck of a vessel from which the unit is subsequently launched into water. A protective structure fixed to the base covers the array of tanks.

A restraint system secures the tanks to the base against buoyant upthrust forces. The restraint system may comprise a series of band or strap restraints curving around the top of each tank. The restraints are attached to elongate tensile members extending upwardly from the base, disposed on opposite sides of the underlying tank. This arrangement transfers loads efficiently from each tank to the base on load paths that bypass the other tanks, decoupling each tank from upthrust forces experienced by other tanks.

In order that the invention may be more readily understood, reference will now be made by way of example to the accompanying drawings, in which:
Figure 1 is a perspective view of a semi-submersible barge for use in constructing and transporting a hydrogen storage unit of the invention, showing a mould assembled on a deck of the barge;
Figure 2 is a top plan view of the barge of Figure 1, showing a concrete base slab of the storage unit cast in the mould;
Figure 3 is a perspective view of the barge of Figure 1, showing an array of storage tanks of the storage unit being assembled on the base slab;
Figure 4 is a perspective view of the completed array of storage tanks of the storage unit fully assembled on the base slab;
Figure 5 is a perspective view of the completed storage unit with a protective cover assembled over the array of storage tanks of the unit;
Figure 6 corresponds to Figure 5 but shows the storage unit cut away in a longitudinal vertical sectional plane;
Figure 7 is an enlarged detail perspective view of the storage unit showing a restraint system 28 for holding storage tanks relative to the slab;
Figure 8 is an enlarged detail perspective view showing piping and coupling arrangements at an end of the storage unit;
Figure 9 is an enlarged detail perspective view of the storage unit showing an alternative restraint system for holding storage tanks relative to the slab;
Figure 10 is an enlarged detail perspective view of the storage unit showing the alternative restraint system of Figure 9, with the frame of the restraint system removed for clarity;
Figure 11 is another enlarged detail perspective view of the storage unit showing the restraint system of Figures 9 and 10;
Figures 12a, 12b, and 12c are a sequence of perspective views showing the storage unit being transported on, and then launched from, the barge shown in Figures 1 to 3;
Figure 13 is a perspective view of a series of storage units of the invention coupled end-to-end;
Figure 14 is a schematic side view of a storage unit of the invention in a surface tow operation;
Figure 15 is a schematic side view of a storage unit of the invention in a mid-water tow operation;
Figure 16 is a schematic side view of a storage unit of the invention being installed on the seabed; and
Figure 17 is a schematic side view of a storage unit of the invention used in the context of an offshore hydrocarbon production or wind power installation.

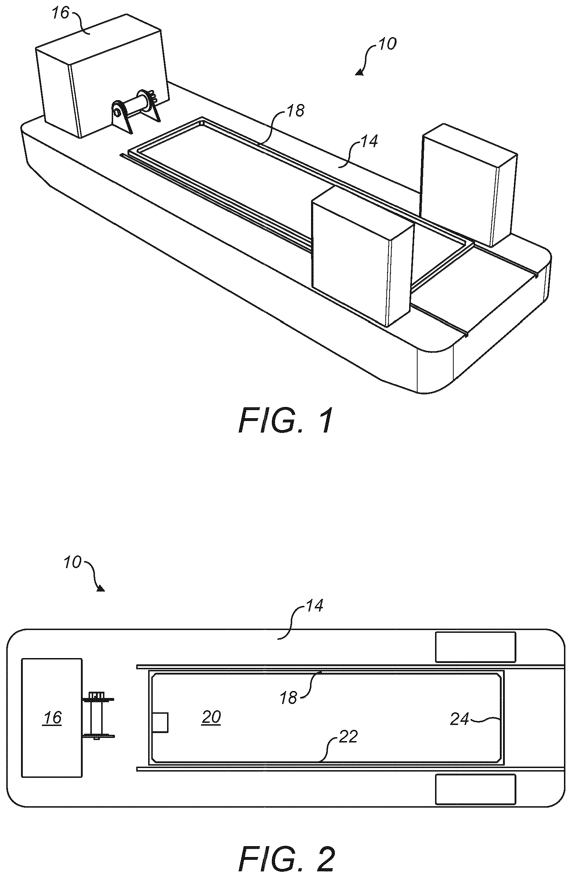

Figures 1 to 3 show a semi-submersible barge 10 for use in constructing and transporting a hydrogen storage unit 12 of the invention. The barge 10 comprises a fully floodable working deck 14 surmounted by a superstructure 16 that floods partially when the barge 10 is ballasted to lower the working deck 14 beneath the surface.

Figure 1 shows a generally rectangular mould 18 assembled on a deck 14 of the barge 10 into which concrete can be poured to cast a flat base slab 20 as shown in Figure 2.

The mould 18 is elongate in a fore-and-aft direction relative to the barge 10. Thus, the base slab 20 is similarly elongate and similarly oriented, comprising mutually parallel long sides 22 extending longitudinally joined by mutually parallel short sides, or ends 24, extending orthogonally relative to the long sides 22. By way of example, the base slab 20 may have a length of about 35m, a width of about 9m and a weight of about 700 tons.

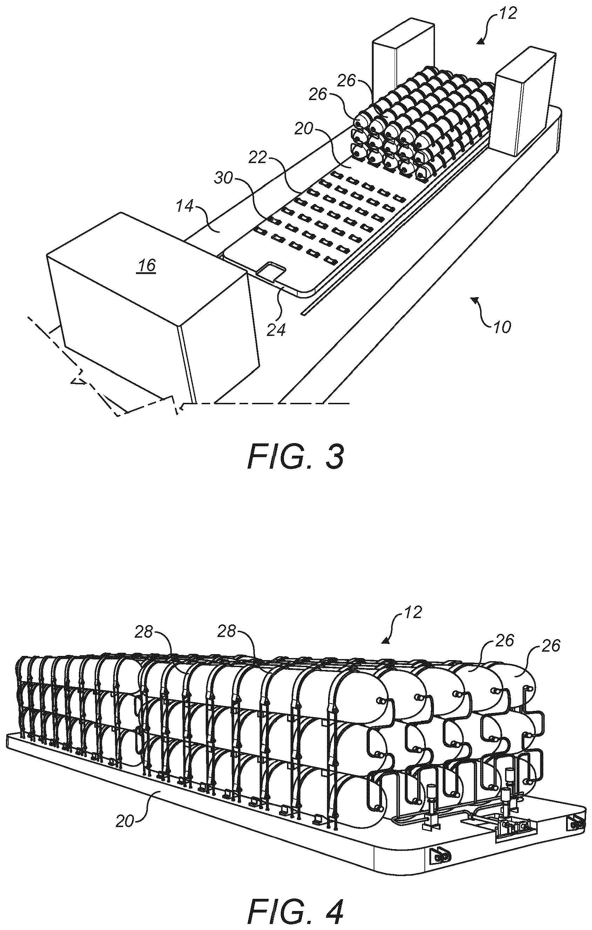

Figure 3 shows a storage system of the unit 12 being assembled from storage tanks 26 on the base slab 20 aboard the barge 10. Half of the set of storage tanks 26 of the system have now been installed onto one end of the base slab 20. In this example, there are three horizontal rows or layers of tanks 26 stacked onto the base slab 20. The other half of the set of storage tanks 26 remains to be installed onto the other end of the base slab 20, but an array of cradle supports 30 is shown here fixed to the slab 20 ready to receive the lowermost layer of those tanks 26.

Figure 4 shows the fully assembled storage system atop the base slab 20. In this example, the storage system comprises a total of thirty elongate tanks 26 extending along axes parallel to the fore-and-aft direction and hence parallel to the long sides 22 of the base slab 20. The tanks 26 are grouped in three stacked horizontal rows that extend transversely across the base slab 20, each row comprising ten tanks 26 in five end-to-end pairs. The tanks 26 of each pair are aligned on respective common axes.

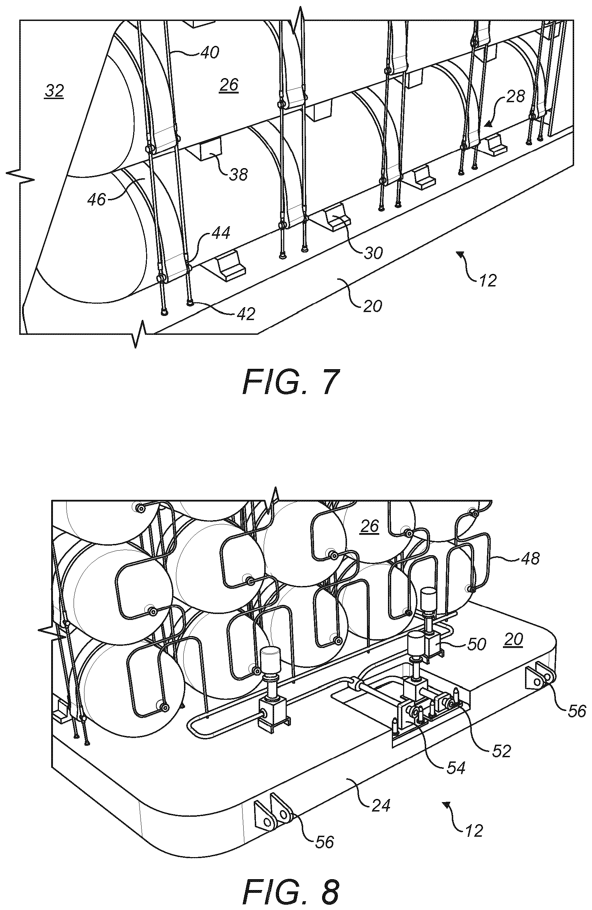

Figure 4 also shows how the tanks 26 of the storage unit 12 are coupled to the base slab 20. The restraint system 28 provided for that purpose will be described in more detail with reference to Figure 7.

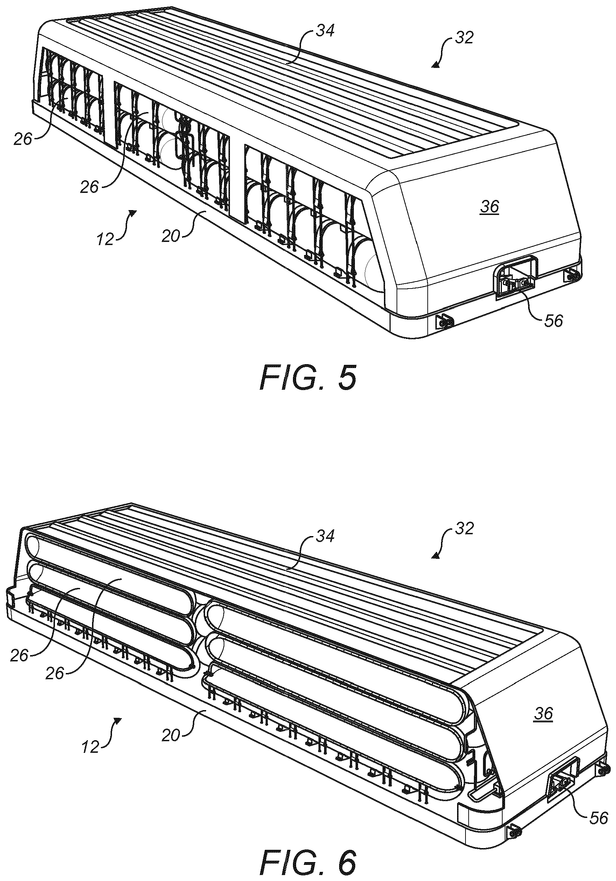

Figures 5 and 6 show the storage unit 12 completed by the addition of a cover structure 32. The cover structure 32 has a generally flat top face 34 with radiused edges, the top face 34 being spaced apart from the base slab 20 and in a parallel plane. The top face 34 and the base slab 20 have the same width, whereas the top face 34 is shorter than the base slab 20 and is centred longitudinally with respect to the base slab 20. Thus, the cover structure 32 is shaped as a regular trapezium in longitudinal section or in side view. Downwardly tapering wedge-shaped end faces 36 extend from the ends of the top face 34 to the ends 24 of the base slab 20.

The cover structure 32 comprises panels that are apt to be moulded of fibre-reinforced composites. At least some of those panels may be movable or removable to provide access to the tanks 26 and other parts of the storage system for routine maintenance or other operations requiring subsea intervention, for example using an ROV. For the same reason, the vertical sides of the cover structure 32 may be left open as shown.

The cover structure 32 is arranged to protect the tanks 26 and other parts of the storage system against overtrawling and dropped objects when installed on the seabed. In particular, the storage unit 12 is overtrawlable by virtue of its wedge-shaped end faces 36, radiused edges and substantially flush-fitting panels.

The panels of the cover structure 32 may be supported by an underlying frame such as a lattice that can be assembled or fabricated from box-section members of composite material or steel. The frame need only be strong enough to support the panels and to resist overtrawling and dropped objects. This is because the base slab 20 provides the main structural strength of the storage unit 12, to the extent that the unit 12 could in theory be transported and installed without the cover structure 32 in place. However, it would be possible instead to integrate a frame of the cover structure 32 with the base slab 20 in such a way that the frame contributes substantially to the rigidity of the unit 12 as a whole. In any event, the unit 12 is of self-supporting strength sufficient for the unit 12 to be lifted, launched and/or towed while maintaining its structural integrity and protecting the tanks 26 within.

Figures 7 and 8 show details of how the tanks 26 of the storage unit 12 are coupled to the base slab 20, how the tanks 26 are coupled to each other, and how storage units 12 may be coupled together.

Figure 7 shows a restraint system 28 that couples the tanks 26 of the storage unit 12 to the base slab 20. The restraint system 28 comprises longitudinal arrays of the aforementioned cradle supports 30 fixed to the upper side of the base slab 20. Each cradle support 30 extends transversely, parallel to the ends 24 of the base slab 20, and has upwardly concave curvature complementing the external convex curvature of the storage tank 26 supported above. Thus, each longitudinal array of cradle supports 30 defines a channel section that cradles the bottom of the tank 26 above and prevents lateral movement of the tank 26 relative to the base slab 20.

Similar longitudinal arrays of intermediate supports 38 are sandwiched between adjoining layers of tanks 26. The intermediate supports 38 have upwardly and downwardly concave curvature complementing the external curvature of the storage tanks 26 disposed above and below, thus preventing lateral movement of the second and third layers of tanks 26 relative to the base slab 20. Like the cradle supports 30, the intermediate supports 38 are apt to be made of moulded polymer or composite materials but could be made of metal. The cradle supports 30 and the intermediate supports 38 could be of resilient material or construction.

The stacked tanks 26 are held together row-to-row and the stack of tanks 26 is pressed down against the base slab 20, thus holding the tanks 26 in engagement with the cradle supports 30 and the intermediate supports 38. This compression applied to the stack is generated by tension in tensile rods 40 that extend upwardly in pairs from respective anchors 42 fixed in the base slab 20. For example, the anchors 42 could be cast into the base slab 20 when concrete of the base slab is poured around them. The pairs of tensile rods 40 are in longitudinal arrays that are themselves arranged in pairs straddling each of the tanks 26 of each row.

The rods 40 of each pair support, and are joined by, fixings 44 that are clamped to or otherwise engaged with the rods 40 so as not to move along the rods. Restraining straps 46 wrap circumferentially over the tanks 26 with part-circular shape and are kept under tension by being attached at their ends to corresponding fixings 44 of each pair of tensile rods 40 on opposite sides of each tank 26. For this purpose, each fixing 44 comprises a longitudinally-extending pin that engages with an end of a strap 46.

The restraining straps 46 are suitably made of composite materials, in which case fibre reinforcements may extend longitudinally along the length of each strap 46. The straps 46 may be flexible so as to bend along their length but are preferably substantially inextensible under the loads expected in use.

It will be noted that, advantageously, the restraint system 28 comprising the rods 40, fixings 44 and restraining straps 46 transfers buoyant upthrust loads from the tanks 26 directly to the base slab 20 on load paths that bypass any intermediate tanks 26. This minimises stress experienced by the tanks 26. In the example shown, this arrangement allows the cover structure 32 to be structurally independent and therefore simple and inexpensive. The cover structure 32 is therefore also light in weight, which contributes to the stability of the unit 10 when immersed in water.

Figure 8 shows piping 48 and fittings including small-bore needle valves 50 that effect fluid communication between the tanks 26 of the storage system and that couple the tanks 26 to an inboard hub 52 located at a tie-in porch 54 on an end 24 of the base slab 20. The hub 52 may be connected to a riser directly or via a pipe, or via another storage unit 12 of the invention. Gas is thereby conveyed to and from the tanks 26 as required.

It will be apparent that Figure 8 omits the cover structure 32 for clarity. It will also be apparent from Figures 5 and 6 that the cover structure 32 has an end aperture 56 providing access to the hub 52 and the tie-in porch 54.

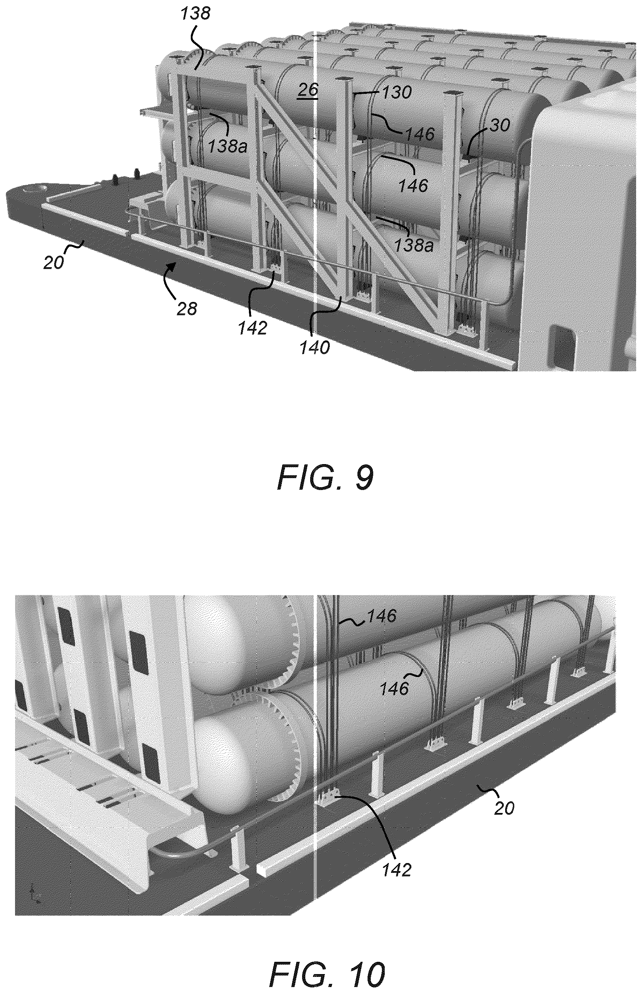

Figure 8 also shows brackets 58 protruding from an end of the base slab 20. Pivoting linkages may be attached to the brackets 58 to couple the storage unit 12 to towing or lifting wires or to another similar unit 12 joined in series end-to-end. In this respect, it is possible to combine two or more storage units 12 of the invention to make a larger storage facility, as exemplified in Figure 10.

Figures 9, 10 and 11 show an alternative restraint system 28 for the tanks 26 which comprises a frame 138 and a plurality of ropes 146. The frame 138 is fixed to the base slab 20 and comprises a series of struts 138a extending transversely, and generally horizontally, across the array of tanks 26 between upright pillars 140. The struts 138a extend in between the rows of the array of tanks 26 so that each tank 26 rests on and is supported by a number of the struts 138a, except for those tanks 26 on the bottom row of the array, which rest on the base slab 20. There is a small vertical clearance between the bottom of the struts 138a and the tank 26 below. This helps mitigate negative effects of differential thermal expansion and contraction between the tanks 26 and the frame 138.

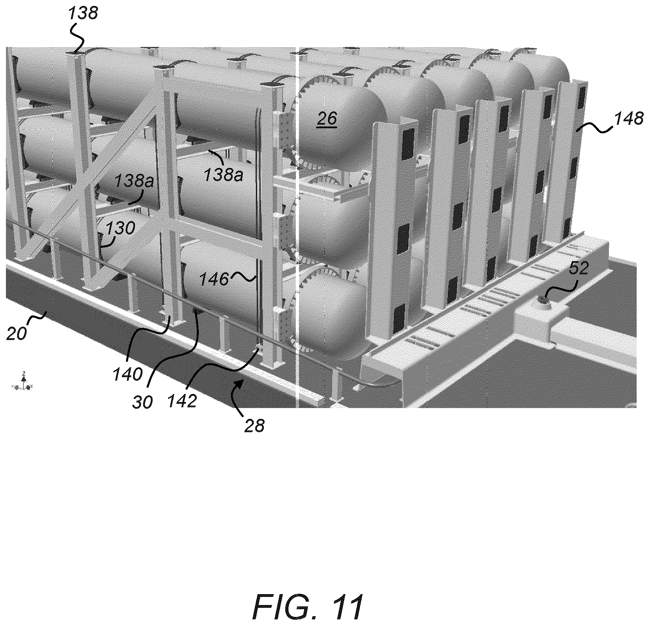

As in Figure 7, a series of longitudinal arrays of cradle supports 30 are fixed to the base slab 20 and the struts 138a in order to cradle the bottom of the tank 26 above and prevent lateral movement thereof relative to the base slab 20. As before, the upwardly concave nature of each longitudinal array of cradle supports 30 defines a channel section within which the tank 26 is positioned. The cradle supports 30 that support tanks 26 in upper rows of the array are mounted to the struts 138a, and so only require one concave surface to support the tank 26 above, as opposed to the bi-concave intermediate supports 38 in the restraint system 28 of Figure 7, which are positioned in between tanks 26 in adjacent layers. The pillars 140 may also comprise lateral supports 130, shown most clearly in Figure 11, that engage with the sides of the tanks 26 to further aid in positioning the tanks 26 in the array.

The tanks 26 are secured against the cradle supports 30 by the ropes 146, which may be made of synthetic or natural fibres, or may take the form of steel cables. The ropes 146 are fixed to the base slab 20 by anchors 142, with one anchor 142 positioned on each side of the tank 26 with which the rope 146 is associated. Each rope 146 takes the form of a loop that is wrapped around a pin in each anchor 142 and extends part-circumferentially around the top of the tank 26 such that each tank 26 is wrapped by two parallel portions of the rope 146. Each anchor 142 may comprise multiple pins to define an anchoring point for a rope 146 associated with a tank 26 in each row of the array of tanks 26. Consequently, the anchors 142 in Figures 9 to 11 define an anchoring point for three ropes 146, to reflect the three rows in the array of tanks 26. The anchors 142 may define an array, extending transversely across the array of tanks 26 and longitudinally along each end-to-end pair of tanks 26 so that each tank 26 is secured against the cradle supports 30 by multiple ropes 146.

The ropes 146 are tensioned to hold the tanks 26 against the cradle supports 30 against the action of buoyant upthrust. As with the restraint system 28 of Figure 7, the load path transferring buoyant upthrust from the tanks 26 passes directly through the struts 138a and the frame 138 and to the base slab 20 and so does not pass through intermediate tanks 26, thereby minimising stresses on those tanks 26 in lower rows of the array and enabling the cover structure 32 to be structurally independent.

Figure 11 also shows an optional cover 148 for the piping 48 and valves 50 shown in Figure 8. The hub 52 is still accessible through a hole in the cover to enable connection to a riser and transfer of the gas to and from the tanks, in a similar way to that described above with reference to Figure 8.

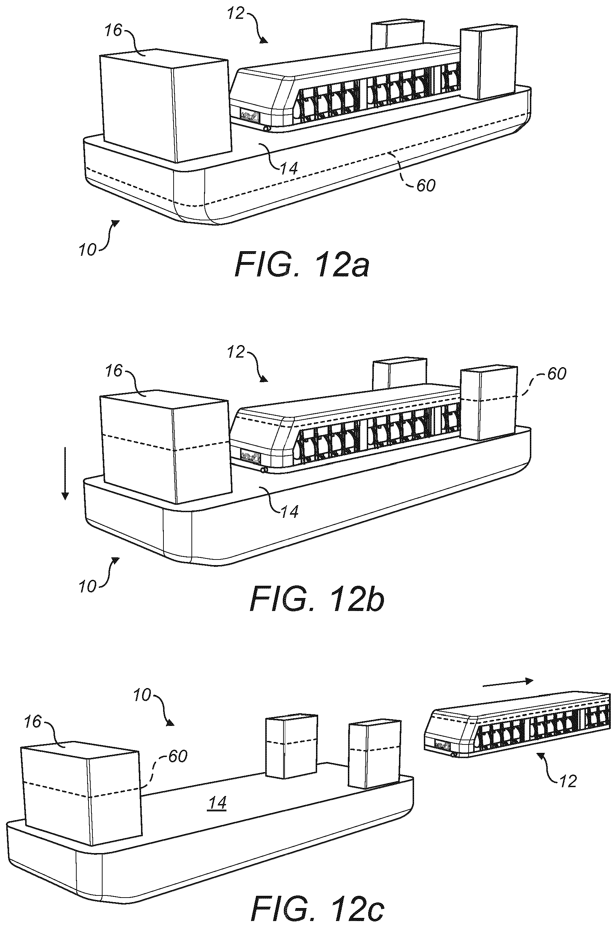

Figure 12a shows the completed storage unit 12 being transported on a barge 10 like that shown in Figures 1 to 3. The barge 10 is shown here in a transit mode in which the working deck 14 is raised clear of the water surface 60. In that mode, the barge 10 can convey the unit 12 all of the way to an installation site before launching the unit 12 into the water or part of the way to the installation site, for example to water that is deep enough for subsequently towing the unit 12 in mid-water the rest of the way. Alternatively, the barge 10 can remain in sheltered water near shore and launch the unit 12 from there, hence essentially serving only as a factory or dry dock for construction of the unit 12 without transportation duties.

Figure 12b shows the barge 10 now ballasted into a launch mode in which the working deck 14 is lowered beneath the surface 60 and hence fully flooded. It will be noted that the waterline is now part of the way up the superstructure 16 and that the storage unit 12 is now partially submerged. Then, when the unit 12 is submerged to an extent that it becomes positively buoyant, the unit 12 can be released from the barge 10 to float clear of the deck 14. The unit 12 can then be towed clear of the superstructure 16 and into the surrounding water as shown in Figure 12c. Alternatively, the unit 12 could simply be launched into water by moving the barge 10 away and sinking the unit 12 to rest on the seabed.

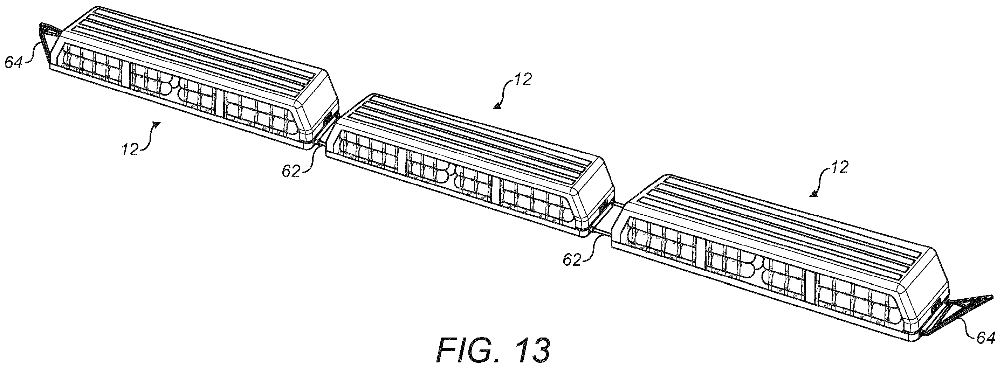

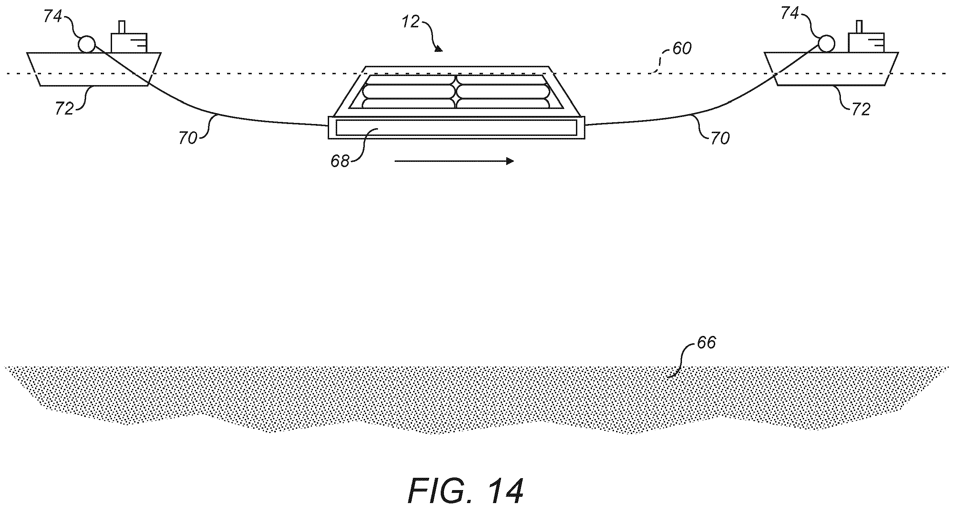

Figure 13 shows a series of three storage units 12 coupled to each other end-to-end via linkages in the form of intermediate articulated connectors 62 such as chains. The units 12 could be launched from a barge 10 like that of Figures 1 to 3 individually and then connected in the water or could be launched as a pre-connected series if the barge 10 is large enough. The series of units 12 is apt to be towed and lowered together in towing and installation operations like those shown in Figures 14 to 16. For this purpose, further linkages on the units 12 at the ends 24 of the series are defined by pivoting A-frames 64 to which towing wires can be attached. Alternatively, the units 12 could be lowered individually to the seabed, for example by a crane, and then coupled together there.

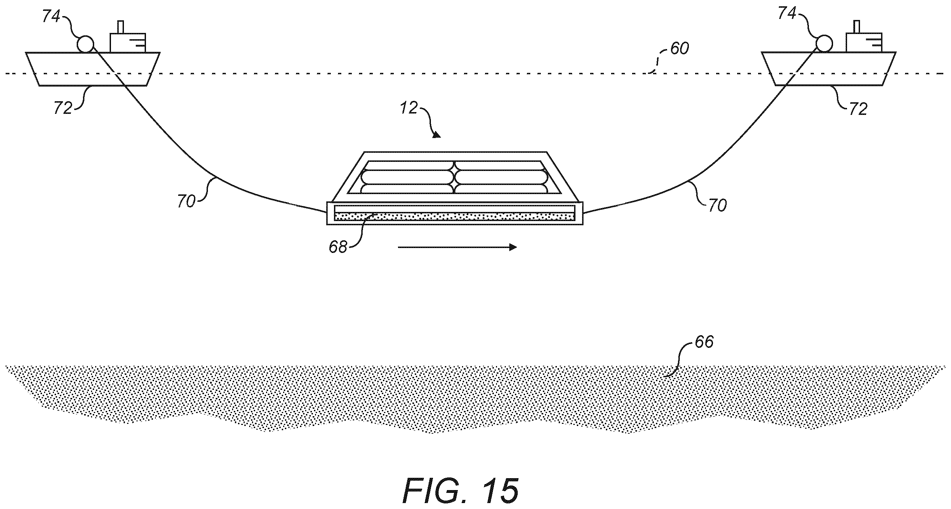

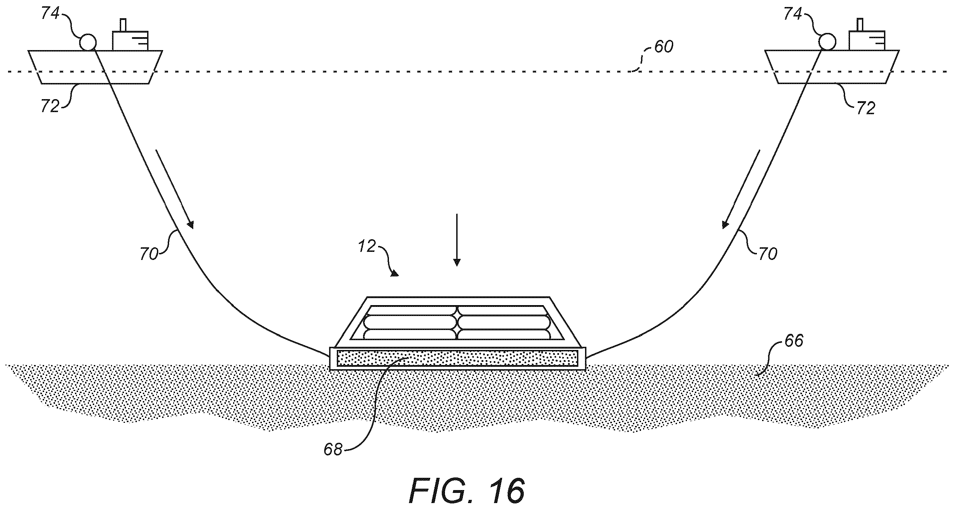

Figures 14 to 16 show, schematically, a storage unit 12 of the invention being transported and installed by a wet towing method. This involves towing the unit 12 through water to an installation site and lowering it there to the seabed 66. In Figures 14 to 16, shading is used to show where ballast tanks 68 of the unit 12 contain mainly air (no shading, as in Figure 14), a combination of water and air (half shading, as in Figure 15) or mainly water (full shading, as in Figure 16).

For surface towing as in Figure 14, the ballast tanks 68 of the storage unit 12 contain mainly air to impart positive buoyancy to the unit 12. For mid-water towing as in Figure 15, the ballast tanks 68 are partially filled with water and partially filled with air to impart near-neutral or slightly negative buoyancy to the unit 12. To settle the unit 12 on the seabed 66 as in Figure 16, the ballast tanks 68 contain mainly water to impart strongly negative buoyancy to the unit 12.

By way of example, mid-water towing as in Figure 15 could employ the Controlled Depth Tow Method or CDTM as described in EP 0069446, WO 2014/095942 and a technical paper OTC 6430 (OTC Conference, 1990). In the CDTM, the towed unit 12 is slightly negatively buoyant at a given water depth but it stabilises at that depth due to drag forces experienced during towing.

The CDTM principle involves transportation of the prefabricated and fully-tested storage unit 12 suspended on towing lines 70 between surface vessels 72 fore and aft. Unlike an installation barge 10, these vessels 72 may be relatively small and inexpensive vessels equipped with winches 74, such as tugs.

Drag chains could be used for ballasting and depth control but such chains are optional in the present invention if ballast tanks 68 are provided to control the depth and trim of the storage unit 12 during towing.

As the shading in Figure 15 shows, the ballast tanks 68 of the storage unit 12 are partially flooded under the control of control systems on the storage unit 12 or on a surface vessel. This makes the storage unit 12 slightly negatively buoyant at a predetermined mid-water towing depth, which is preferably at least fifty metres. Modest tension in the towing lines 70 under the drag forces of towing balances the slight negative buoyancy of the storage unit 12 to maintain the desired depth, assisted by ongoing control of the buoyancy of the ballast tanks 68.

At the desired towing depth, the storage unit 12 is held safely clear of the seabed 66 and beneath the influence of wave action near the surface 60. Even if the sea state deteriorates dramatically during the tow, the storage unit 12 can be lowered to the seabed 66 to await better weather conditions.

When the storage unit 12 reaches an installation site, it is lowered toward the seabed 66 by more fully flooding its ballast tanks 68 to increase its negative buoyancy as shown in Figure 16. Meanwhile, the towing lines 70 are paid out from winches 74 of the surface vessels 72. The storage unit 12 then settles onto the seabed 66 as shown in Figure 16.

By dark shading, Figure 16 shows the ballast tanks 68 of the storage unit 12 having been flooded after landing on the seabed 66 to stabilise the unit 12. The static weight of the unit 12 after flooding provides sufficient inertia, friction and stability for the unit 12 to be anchored firmly to the seabed 66.

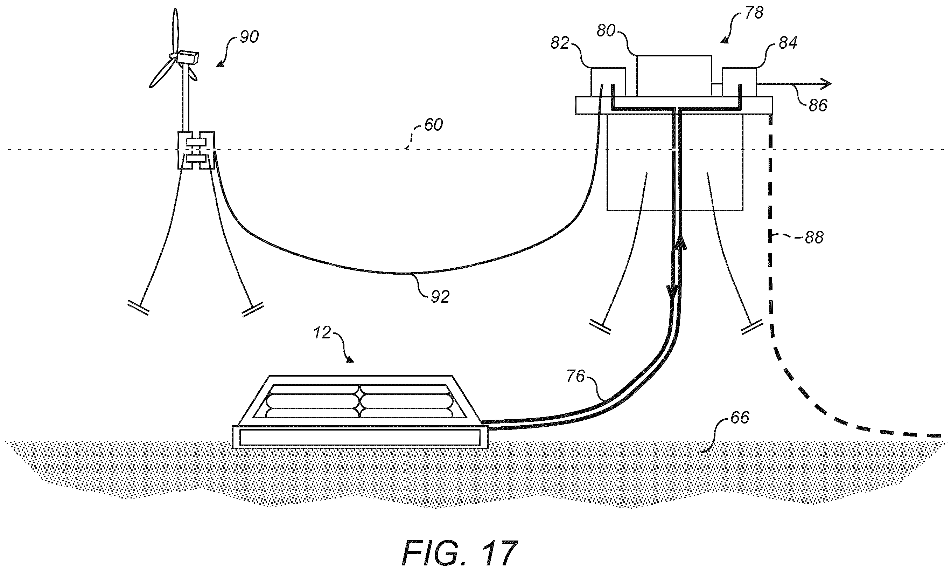

After installation on the seabed 66, the storage unit 12 can be coupled to a riser 76 that extends to a surface installation 78 as shown in Figure 17. The installation 78 comprises consumer equipment 80 requiring a supply of electrical energy, such as a fluid processing system if the installation 78 is a hydrocarbon production facility.

Hydrogen can be pumped down the riser 76 from the installation 78 to the unit 12 when surplus electrical energy is available. For that purpose, the riser 76 is connected to an electrolyser 82 of the installation 78. Conversely, hydrogen can be drawn up the riser 76 from the unit 12 to the installation 78 whenever it is necessary to supplement electrical energy. For that purpose, the riser 76 is connected to a fuel cell 84 of the installation 78. The fuel cell is 84 connected, in turn, to the consumer equipment 80 of the installation 78 and to an export line 86 for use if the fuel cell 84 generates surplus electrical energy.

In this example, the installation 78 is a moored platform floating at the surface 60 but it could instead be an FPSO. Alternatively, the installation 78 could be a platform that stands on the seabed 66. A production riser 88 is shown here as a dashed line extending from the seabed 66 to the surface 60, indicating that the installation 78 could be a hydrocarbon production facility. The installation 78 could instead be a hub of a wind power installation, in which case the dashed line could instead represent a power export cable.

Similarly, Figure 17 shows a moored wind turbine 90 floating at the surface 60 that, in shallow water of less than say 50m, could instead stand on the seabed 66. A cable 92 conveys electrical energy from the wind turbine 90 to the installation 78, either to power the consumer equipment 80 for the purpose of hydrocarbon production or to contribute to power to be exported from the installation 78. There could be several such turbines 90 similarly connected to the installation 78, for example in a linear or circular array, especially if the main purpose of the installation 78 is to export electrical power.

A storage unit 12 of the invention can remain in service on the seabed 66 for many years but it is straightforward to recover the unit 12 from the seabed 66 to the surface 60 when it is no longer required. For this purpose, once the storage unit 12 has been disconnected from other subsea infrastructure, the ballast tanks 68 can be de-ballasted by displacing water with pressurised gas in a controlled manner. De-ballasting in this way reduces the apparent weight of the unit 12 for lifting by a crane or winch of a surface vessel.

If a storage unit 12 is to be scrapped and recycled after use, it could simply be raised to the surface and towed from there to a shore facility. Alternatively, if the unit 12 is to be refurbished and reused, a reverse CDTM process could be employed to avoid damage or fatigue caused by wave action. In that case, injection of de-ballasting gas is controlled to achieve slightly neutral buoyancy at a desired towing depth, whereupon CDTM towing takes place in the water column with controlled depth and buoyancy. Finally, the unit 12 is raised to the surface in shallower, sheltered water near shore to be refurbished for reuse. In essence, this is the reverse of the process shown in Figures 14 to 16. Alternatively, the unit 12 could simply be lifted onto an available barge and transported above the surface.

Many variations are possible within the inventive concept. For example, a storage unit of the invention could be constructed at a coastal yard and lifted or pulled from there into the water or onto a barge. Also, the unit could be transported to an installation site on a barge and lowered by a marine crane or winch to the seabed.

## Claims

1. A method of providing a subsea gas storage unit (12), the method comprising:
manufacturing a weighting base (20);
assembling on the base (20) an array of interconnecting storage tanks (26) and a restraint system (28) that secures the tanks (26) to the base (20) against buoyant upthrust, wherein the restraint system (28) defines load paths from each tank (26) to the base (20) that bypass all other tanks (26) of the array; and
fixing a protective cover structure (32) to the base (20), the cover structure (32) extending over the array of tanks (26),
wherein the tanks (26) have walls of a fibre reinforced polymer composite.

2. The method of Claim 1, comprising building the unit (12) on a deck (14) of a barge (10), lowering the barge (10) in water to flood the deck (14), floating the unit (12) away from the deck (14), and separating the unit (12) from the barge (10).

3. The method of Claim 1 or Claim 2, comprising manufacturing the base (20) by casting the base (20) from concrete poured into a mould (18), and assembling the array of tanks (26) on the base (20) at a location at which the base (20) was cast.

4. The method of Claim 3, comprising embedding anchor fixings (44) of the restraint system (28) into the concrete of the base (20) during casting.

5. The method of any preceding claim, comprising urging the tanks (26) toward the base (20) by virtue of tension in the restraint system (28).

6. The method of any preceding claim, comprising resisting lateral movement of the tanks (26) in directions parallel to the base (20) by placing each tank (26) upon at least one support (30) that is contoured to complement an external contour of the tank (26).

7. The method of Claim 6, comprising applying compression to the support (30) by action of the restraint system (28) on the tank (26).

8. The method of Claim 6 or Claim 7, comprising sandwiching at least one of the supports (30) between tanks (26) of successive layers of the array.

9. The method of any preceding claim, comprising:
placing a set of upright members (40) of the restraint system (28) extending upwardly from the base (20), between and beside the tanks (26) of the array;
placing a series of restraints (46) on top of each tank (26), each restraint (46) being attached to upright members (40) of the set disposed on opposed sides of the underlying tank (26); and
by tension in the upright members (40), urging the restraints (46) and the tanks (26) toward the base (20).

10. The method of Claim 9, comprising bending the restraints (46) around an upper side of each tank (26) and also placing the restraints (46) under tension.

11. The method of Claim 9 or Claim 10, wherein the array of tanks (26) comprises a stack of layers and the upright members (40) extend upwardly beyond a lower layer of the stack to an upper layer of the stack, each upright member (40) having at least two restraints (46) attached at levels above the base (20) corresponding to those layers.

12. The method of any preceding claim, wherein the cover structure (32) is kept separate from the restraint system (28).

13. The method of any preceding claim, further comprising submerging at least the base (20) and the tanks (26) of the unit (12).

14. The method of Claim 13, comprising conveying buoyant upthrust loads from each tank (26) to the base (20) through the restraint system (28) on load paths that bypass all other tanks (26) of the array.

15. The method of Claim 13 or Claim 14, comprising subsequently towing the unit (12) through water in a surface towing operation or a mid-water towing operation before lowering the unit (12) to a seabed location.

16. The method of any preceding claim, comprising connecting two or more of the units (12) together in a modular arrangement.

17. The method of Claim 16, comprising effecting fluid communication between the connected units (12).

18. The method of Claim 16 or Claim 17, comprising towing the connected units (12) as a series before lowering the series of units to a seabed location.

19. The method of any preceding claim, followed by pumping hydrogen into the tanks (26) of the array after the unit (12) has been installed underwater.

20. A subsea gas storage unit (12), comprising:
a weighting base (20);
an array of interconnecting storage tanks (26) positioned on the base (20);
a restraint system (28) that secures the tanks (26) to the base (20) against buoyant upthrust, wherein the restraint system (28) defines load paths from each tank (26) to the base (20) that bypass all other tanks (26) of the array; and
a protective cover structure (32) disposed over the array of tanks (26) and fixed to the base (20),
wherein the tanks (26) have walls of a fibre reinforced polymer composite.

21. The unit (12) of Claim 20, wherein the base (20) is a cast concrete slab.

22. The unit (12) of Claim 20 or Claim 21, wherein the restraint system (28) comprises anchor fixings (44) fixed to an upper side of the base (20).

23. The unit (12) of any of Claims 20 to 22, wherein tension in the restraint system (28) urges the tanks (26) toward the base (20).

24. The unit (12) of any of Claims 20 to 23, further comprising supports (30) under each tank (26), each support (30) being contoured to complement an external contour of the tank (26) to resist lateral movement of the tank (26) in directions parallel to the base (20).

25. The unit (12) of Claim 24, wherein at least some of the supports (30) are sandwiched between tanks (26) of successive layers of the array.

26. The unit (12) of any of Claims 20 to 25, wherein the restraint system (28) comprises:
a set of upright tensile members (40) extending upwardly from the base (20), between and beside the tanks (26) of the array; and
restraints (46) on top of each tank (26), each restraint (46) being attached to upright members (40) of the set disposed on opposed sides of the underlying tank (26).

27. The unit (12) of Claim 26, wherein the restraints curve around an upper side of each tank (26).

28. The unit (12) of Claim 26 or Claim 27, wherein the array of tanks (26) comprises a stack of layers and the upright members (40) extend upwardly beyond a lower layer of the stack to an upper layer of the stack, each upright member (40) having at least two restraints (46) attached at levels above the base (20) corresponding to those layers.

29. The unit (12) of any of Claims 20 to 28, wherein the cover structure (32) is spaced from the restraint system (28).

30. The unit (12) of any of Claims 20 to 29, having a centre of buoyancy disposed above a centre of gravity by virtue of positive buoyancy of the tanks (26) opposed to negative buoyancy of the base (20).

31. A set of two or more of the units (12) of any of Claims 20 to 30, connected together in a modular arrangement.

32. The set of Claim 31, wherein the connected units (12) are in fluid communication with each other.

33. An offshore installation (78) capable of generating electrical energy from a renewable source, the installation comprising an electrolyser (82) powered by that energy and at least one unit (12) of any of Claims 20 to 30 or at least one set of Claim 31 or Claim 32 whose tanks (26) are in fluid communication with the electrolyser (82).

34. The installation (78) of Claim 33, further comprising a fuel cell (84) in fluid communication with the tanks (26) of said at least one unit (12) or set.

35. The installation (78) of Claim 33 or Claim 34, situated at a surface location and in fluid communication with the tanks (26) of said at least one unit (12) or set via a riser (76).

## Patentansprüche

1. Verfahren zum Bereitstellen einer Untersee-Gasspeichereinheit (12), wobei das Verfahren Folgendes umfasst:
Herstellen einer Beschwerungsbasis (20);
Montieren, auf der Basis (20), einer Anordnung von miteinander verbundenen Speicherbehältern (26) und eines Haltesystems (28), das die Behälter (26) gegen schwimmenden Auftrieb an der Basis (20) sichert, wobei das Haltesystem (28) Kraftwege von jedem Behälter (26) zu der Basis (20) definiert, die alle anderen Behälter (26) der Anordnung umgehen; und
Fixieren einer Schutzabdeckungsstruktur (32) an der Basis (20), wobei sich die Abdeckungsstruktur (32) über die Anordnung von Behältern (26) erstreckt,
wobei die Behälter (26) Wände aus einem faserverstärktem Polymerverbundstoff aufweisen.

2. Verfahren nach Anspruch 1, umfassend das Aufbauen der Einheit (12) auf einem Deck (14) einer Schute (10), Absenken der Schute (10) in Wasser, um das Deck (14) zu fluten, Flößen der Einheit (12) von dem Deck (14) weg und Trennen der Einheit (12) von der Schute (10).

3. Verfahren nach Anspruch 1 oder Anspruch 2, umfassend das Herstellen der Basis (20) durch Gießen der Basis (20) aus in eine Form (18) eingegossenem Beton und Montieren der Anordnung von Behältern (26) auf der Basis (20) an einem Ort, an dem die Basis (20) gegossen wurde.

4. Verfahren nach Anspruch 3, umfassend das Einbetten von Ankerfixierungen (44) des Haltesystems (28) in den Beton der Basis (20) während des Gießens.

5. Verfahren nach einem der vorangehenden Ansprüche, umfassend das Drängen der Behälter (26) in Richtung der Basis (20) dank Zugspannung in dem Haltesystem (28).

6. Verfahren nach einem der vorangehenden Ansprüche, umfassend das Widerstehen seitlicher Bewegung der Behälter (26) in Richtungen parallel zu der Basis (20) durch Platzieren jedes Behälters (26) auf mindestens einen Träger (30), der konturiert ist, um zu einer Außenkontur des Behälters (26) komplementär zu sein.

7. Verfahren nach Anspruch 6, umfassend das Aufbringen von Druckspannung auf den Träger (30) durch die Wirkung des Haltesystems (28) auf den Behälter (26).

8. Verfahren nach Anspruch 6 oder Anspruch 7, umfassend das Einklemmen mindestens eines der Träger (30) zwischen Behältern (26) aufeinanderfolgender Schichten der Anordnung.

9. Verfahren nach einem der vorangehenden Ansprüche, umfassend:
Platzieren eines Satzes sich von der Basis (20) nach oben erstreckender aufrechter Glieder (40) des Haltesystems (28) zwischen und neben die Behälter (26) der Anordnung;
Platzieren einer Reihe von Halteelementen (46) zuoberst auf jeden Behälter (26), wobei jedes Halteelement (46) an auf gegenüberliegenden Seiten des darunterliegenden Behälters (26) angeordneten aufrechten Gliedern (40) des Satzes befestigt ist; und
Drängen der Halteelemente (46) und der Behälter (26) in Richtung der Basis (20) durch Zugspannung in den aufrechten Gliedern (40).

10. Verfahren nach Anspruch 9, umfassend das Biegen der Halteelemente (46) um eine Oberseite jedes Behälters (26) und außerdem Setzen der Halteelemente (46) unter Zugspannung.

11. Verfahren nach Anspruch 9 oder Anspruch 10, wobei die Anordnung von Behältern (26) einen Stapel von Schichten umfasst und sich die aufrechten Glieder (40) über eine untere Schicht des Stapels hinaus zu einer oberen Schicht des Stapels nach oben erstrecken, wobei an jedem aufrechten Element (40) mindestens zwei Halteelemente (46) auf diesen Schichten entsprechenden Höhen über der Basis (20) befestigt sind.

12. Verfahren nach einem der vorangehenden Ansprüche, wobei die Abdeckungsstruktur (32) von dem Haltesystem (28) getrennt gehalten wird.

13. Verfahren nach einem der vorangehenden Ansprüche, ferner umfassend das Untertauchen mindestens der Basis (20) und der Behälter (26) der Einheit (12).

14. Verfahren nach Anspruch 13, umfassend das Leiten von Schwimmauftriebskräften von jedem Behälter (26) zu der Basis (20) über das Haltesystem (28) auf Kraftwegen, die alle anderen Behälter (26) der Anordnung umgehen.

15. Verfahren nach Anspruch 13 oder Anspruch 14, umfassend das anschließende Schleppen der Einheit (12) durch Wasser in einem Oberflächenschleppvorgang oder einem Mittelwasserschleppvorgang vor dem Absenken der Einheit (12) an einen Ort auf dem Meeresboden.

16. Verfahren nach einem der vorangehenden Ansprüche, umfassend das Verbinden von zwei oder mehr der Einheiten (12) miteinander in einer modularen Gruppierung.

17. Verfahren nach Anspruch 16, umfassend das Bewirken von Fluidverbindung zwischen den verbundenen Einheiten (12).

18. Verfahren nach Anspruch 16 oder Anspruch 17, umfassend das Schleppen der verbundenen Einheiten (12) als Reihe vor dem Absenken der Reihe von Einheiten an einen Ort auf dem Meeresboden.

19. Verfahren nach einem der vorangehenden Ansprüche, gefolgt vom Pumpen von Wasserstoff in die Behälter (26) der Anordnung, nachdem die Einheit (12) unter Wasser installiert worden ist.

20. Untersee-Gasspeichereinheit (12), umfassend:
eine Beschwerungsbasis (20);
eine Anordnung von miteinander verbundenen Speicherbehältern (26), die auf der Basis (20) positioniert sind;
ein Haltesystem (28), das die Behälter (26) gegen schwimmenden Auftrieb an der Basis (20) sichert, wobei das Haltesystem (28) Kraftwege von jedem Behälter (26) zu der Basis (20) definiert, die alle anderen Behälter (26) der Anordnung umgehen; und
eine Schutzabdeckungsstruktur (32), die über der Anordnung von Behältern (26) angeordnet und an der Basis (20) fixiert ist,
wobei die Behälter (26) Wände aus faserverstärktem Polymerverbundstoff aufweisen.

21. Einheit (12) nach Anspruch 20, wobei die Basis (20) eine gegossene Betonplatte ist.

22. Einheit (12) nach Anspruch 20 oder Anspruch 21, wobei das Haltesystem (28) an einer Oberseite der Basis (20) fixierte Ankerfixierungen (44) umfasst.

23. Einheit (12) nach einem der Ansprüche 20 bis 22, wobei Zugspannung in dem Haltesystem (28) die Behälter (26) in Richtung der Basis (20) drängt.

24. Einheit (12) nach einem der Ansprüche 20 bis 23, ferner umfassend Träger (30) unter jedem Behälter (26), wobei jeder Träger (30) konturiert ist, um zu einer Außenkontur des Behälters (26) komplementär zu sein, um seitlicher Bewegung des Behälters (26) in Richtungen parallel zu der Basis (20) zu widerstehen.

25. Einheit (12) nach Anspruch 24, wobei mindestens einige der Träger (30) zwischen Behältern (26) aufeinanderfolgender Schichten der Anordnung eingeklemmt sind.

26. Einheit (12) nach einem der Ansprüche 20 bis 25, wobei das Haltesystem (28) Folgendes umfasst:
einen Satz sich von der Basis (20) nach oben erstreckender aufrechter Zugglieder (40) zwischen und neben den Behältern (26) der Anordnung;
Halteelemente (46) zuoberst auf jeden Behälter (26), wobei jedes Halteelement (46) an auf gegenüberliegenden Seiten des darunterliegenden Behälters (26) angeordneten aufrechten Gliedern (40) des Satzes angebracht ist.

27. Einheit (12) nach Anspruch 26, wobei die Halteelemente um eine Oberseite jedes Behälters (26) gebogen sind.

28. Einheit (12) nach Anspruch 26 oder Anspruch 27, wobei die Anordnung von Behältern (26) einen Stapel von Schichten umfasst und sich die aufrechten Glieder (40) über eine untere Schicht des Stapels hinaus zu einer oberen Schicht des Stapels erstrecken, wobei an jedem aufrechten Element (40) mindestens zwei Halteelemente (46) auf diesen Schichten entsprechenden Höhen über der Basis (20) angebracht sind.

29. Einheit (12) nach einem der Ansprüche 20 bis 28, wobei die Abdeckungsstruktur (32) von dem Haltesystem (28) beabstandet ist.

30. Einheit (12) nach einem der Ansprüche 20 bis 29, die einen Verdrängungsschwerpunkt aufweist, der dank negativem Auftrieb der Basis (20) entgegengesetztem positivem Auftrieb der Behälter (26) über einem Gewichtsschwerpunkt angeordnet ist.

31. Satz von zwei oder mehr der Einheiten (12) nach einem der Ansprüche 20 bis 30, die in einer modularen Gruppierung miteinander verbunden sind.

32. Satz nach Anspruch 31, wobei die verbundenen Einheiten (12) miteinander in Fluidverbindung stehen.

33. Offshoreanlage (78), die in der Lage ist, elektrische Energie aus einer erneuerbaren Quelle zu erzeugen, wobei die Anlage einen mit dieser Energie betriebenen Elektrolyseur (82) und mindestens eine Einheit (12) nach einem der Ansprüche 20 bis 30 oder mindestens einen Satz nach Anspruch 31 oder Anspruch 32, dessen Behälter (26) mit dem Elektrolyseur (82) in Fluidverbindung stehen, umfasst.

34. Anlage (78) nach Anspruch 33, ferner umfassend eine Brennstoffzelle (84) in Fluidverbindung mit den Behältern (26) der mindestens einen Einheit (12) oder des mindestens einen Satzes.

35. Anlage (78) nach Anspruch 33 oder Anspruch 34, die an einem Ort an der Oberfläche gelegen ist und über ein Steigrohr (76) mit den Behältern (26) der mindestens einen Einheit (12) oder dem mindestens einen Satz in Fluidverbindung steht.

## Revendications

1. Procédé d'installation d'une unité d'emmagasinage de gaz sous-marine (12), le procédé comprenant :
fabriquer une base de lestage (20) ;
assembler sur la base (20) un groupement de réservoirs d'emmagasinage communicants (26) et un système de retenue (28) qui assujettit les réservoirs (26) à la base (20) à l'encontre de la poussée d'Archimède, le système de retenue (28) définissant des voies de contrainte de chaque réservoir (26) à la base (20) qui contournent tous les autres réservoirs (26) du groupement ; et
fixer une structure de recouvrement protectrice (32) à la base (20), la structure de recouvrement (32) s'étendant sur le groupement de réservoirs (26),
les réservoirs (26) comportant des parois en composite de polymère renforcé par des fibres.

2. Procédé selon la revendication 1, comprenant le fait de construire l'unité (12) sur un pont (14) d'une barge (10), le fait d'abaisser la barge (10) dans l'eau de façon à immerger le pont (14), le fait d'amener l'unité (12) à flotter de sorte qu'elle s'écarte du pont (14), et le fait de séparer l'unité (12) de la barge (10).

3. Procédé selon la revendication 1 ou la revendication 2, comprenant le fait de fabriquer la base (20) par coulage de la base (20) à partir de béton versé dans un moule (18), et le fait d'assembler le groupement de réservoirs (26) sur la base (20) à un emplacement au niveau duquel la base (20) a été coulée.

4. Procédé selon la revendication 3, comprenant le fait d'incorporer des éléments de fixation d'ancrage (44) du système de retenue (28) dans le béton de la base (20) lors du coulage.

5. Procédé selon l'une quelconque des revendications précédentes, comprenant le fait de solliciter les réservoirs (26) en direction de la base (20) par une tension dans le système de retenue (28).

6. Procédé selon l'une quelconque des revendications précédentes, comprenant le fait de créer une résistance à un mouvement latéral des réservoirs (26) dans des directions parallèles à la base (20) en plaçant chaque réservoir (26) sur au moins un support (30) pourvu d'un contour conçu pour être complémentaire d'un contour extérieur du réservoir (26).

7. Procédé selon la revendication 6, comprenant le fait d'appliquer une compression au support (30) par l'action du système de retenue (28) sur le réservoir (26).

8. Procédé selon la revendication 6 ou la revendication 7, comprenant le fait d'intercaler au moins un des supports (30) entre des réservoirs (26) de couches successives du groupement.

9. Procédé selon l'une quelconque des revendications précédentes, comprenant :
placer un jeu de montants (40) du système de retenue (28), s'étendant vers le haut à partir de la base (20), entre les réservoirs (26) du groupement et à côté de ceux-ci ;
placer une série d'éléments de retenue (46) par-dessus chaque réservoir (26), chaque élément de retenue (46) étant attaché à des montants (40) du jeu disposés sur des côtés opposés du réservoir sous-jacent (26) ; et
par le biais d'une tension dans les montants (40), solliciter les éléments de retenue (46) et les réservoirs (26) en direction de la base (20).

10. Procédé selon la revendication 9, comprenant le fait de courber les éléments de retenue (46) autour d'un côté supérieur de chaque réservoir (26) et également le fait de mettre les éléments de retenue (46) en tension.

11. Procédé selon la revendication 9 ou la revendication 10, dans lequel le groupement de réservoirs (26) comprend un empilement de couches et les montants (40) s'étendent vers le haut au-delà d'une couche inférieure de l'empilement jusqu'à une couche supérieure de l'empilement, chaque montant (40) comportant au moins deux éléments de retenue (46) attachés à des niveaux au-dessus de la base (20) correspondant à ces couches.

12. Procédé selon l'une quelconque des revendications précédentes, dans lequel la structure de recouvrement (32) est maintenue séparée du système de retenue (28).

13. Procédé selon l'une quelconque des revendications précédentes, comprenant, en outre, le fait d'immerger au moins la base (20) et les réservoirs (26) de l'unité (12).

14. Procédé selon la revendication 13, comprenant le fait de transmettre des charges de poussée d'Archimède de chaque réservoir (26) à la base (20) à travers le système de retenue (28) sur des voies de contrainte qui contournent tous les autres réservoirs (26) du groupement.

15. Procédé selon la revendication 13 ou la revendication 14, comprenant le fait de remorquer ensuite l'unité (12) à travers l'eau lors d'une opération de remorquage en surface ou une opération de remorquage à mi-profondeur avant d'abaisser l'unité (12) jusqu'à un emplacement du fond marin.

16. Procédé selon l'une quelconque des revendications précédentes, comprenant le fait de raccorder au moins deux des unités (12) entre elles en un agencement modulaire.

17. Procédé selon la revendication 16, comprenant le fait d'établir une communication fluidique entre les unités (12) raccordées.

18. Procédé selon la revendication 16 ou la revendication 17, comprenant le fait de remorquer les unités (12) raccordées en une file avant d'abaisser la file d'unités jusqu'à un emplacement du fond marin.

19. Procédé selon l'une quelconque des revendications précédentes, à la suite duquel de l'hydrogène est introduit par pompage dans les réservoirs (26) du groupement une fois que l'unité (12) a été installée sous l'eau.

20. Unité d'emmagasinage de gaz sous-marine (12) comprenant :
une base de lestage (20) ;
un groupement de réservoirs d'emmagasinage communicants (26) placés sur la base (20) ;
un système de retenue (28) qui assujettit les réservoirs (26) à la base (20) à l'encontre de la poussée d'Archimède, le système de retenue (28) définissant des voies de contrainte de chaque réservoir (26) à la base (20) qui contournent tous les autres réservoirs (26) du groupement ; et
une structure de recouvrement protectrice (32) disposée sur le groupement de réservoirs (26) et fixée à la base (20),
les réservoirs (26) comportant des parois en composite de polymère renforcé par des fibres.

21. Unité (12) selon la revendication 20, dans laquelle la base (20) est une dalle de béton coulée.

22. Unité (12) selon la revendication 20 ou la revendication 21, dans laquelle le système de retenue (28) comprend des éléments de fixation d'ancrage (44) fixés à un côté supérieur de la base (20).

23. Unité (12) selon l'une quelconque des revendications 20 à 22, dans laquelle une tension dans le système de retenue (28) sollicite les réservoirs (26) en direction de la base (20).

24. Unité (12) selon l'une quelconque des revendications 20 à 23, comprenant, en outre, des supports (30) sous chaque réservoir (26), chaque support (30) étant pourvu d'un contour conçu pour être complémentaire d'un contour extérieur du réservoir (26) afin de créer une résistance à un mouvement latéral du réservoir (26) dans des directions parallèles à la base (20).

25. Unité (12) selon la revendication 24, dans laquelle au moins certains des supports (30) sont intercalés entre des réservoirs (26) de couches successives du groupement.

26. Unité (12) selon l'une quelconque des revendications 20 à 25, dans laquelle le système de retenue (28) comprend :
un jeu de montants de tension (40) s'étendant vers le haut à partir de la base (20) entre les réservoirs (26) du groupement et à côté de ceux-ci ; et
des éléments de retenue (46) sur le dessus de chaque réservoir (26), chaque élément de retenue (46) étant attaché à des montants (40) du jeu disposés sur des côtés opposés du réservoir sous-jacent (26).

27. Unité (12) selon la revendication 26, dans laquelle les éléments de retenue se courbent autour d'un côté supérieur de chaque réservoir (26).

28. Unité (12) selon la revendication 26 ou la revendication 27, dans laquelle le groupement de réservoirs (26) comprend un empilement de couches et les montants (40) s'étendent vers le haut au-delà d'une couche inférieure de l'empilement jusqu'à une couche supérieure de l'empilement, chaque montant (40) comportant au moins deux éléments de retenue (46) attachés à des niveaux au-dessus de la base (20) correspondant à ces couches.

29. Unité (12) selon l'une quelconque des revendications 20 à 28, dans laquelle la structure de recouvrement (32) est espacée du système de retenue (28).

30. Unité (12) selon l'une quelconque des revendications 20 à 29, présentant un centre de poussée situé au-dessus d'un centre de gravité du fait d'une flottabilité positive des réservoirs (26) opposée à une flottabilité négative de la base (20).

31. Ensemble d'au moins deux unités (12) selon l'une quelconque des revendications 20 à 30, raccordées entre elles en un agencement modulaire.

32. Ensemble selon la revendication 31, dans lequel les unités (12) raccordées sont en communication fluidique entre elles.

33. Installation en mer (78) capable de générer de l'énergie électrique à partir d'une source renouvelable, l'installation comprenant un électrolyseur (82) alimenté par cette énergie et au moins une unité (12) selon l'une quelconque des revendications 20 à 30 ou au moins un ensemble selon la revendication 31 ou la revendication 32 dont les réservoirs (26) sont en communication fluidique avec l'électrolyseur (82).

34. Installation (78) selon la revendication 33, comprenant, en outre, une pile à combustible (84) en communication fluidique avec les réservoirs (26) de ladite au moins une unité (12) ou dudit au moins un ensemble.

35. Installation (78) selon la revendication 33 ou la revendication 34, située à un emplacement en surface et en communication fluidique avec les réservoirs (26) de ladite au moins une unité (12) ou dudit au moins un ensemble par le biais d'une colonne montante (76).
